# EUROPÄISCHE PATENTSCHRIFT

(11) **EP 1 180 629 B1**
(45) Veröffentlichungstag und Bekanntmachung des Hinweises auf die Patenterteilung: **17.03.2004**
(21) Anmeldenummer: 01810757.3
(22) Anmeldetag: 03.08.2001
(51) Int. Cl.: F16L 5/04

(54) **Brandschutzmanschette**
Fire protection collar
Manchette de protection contre le feu

(30) Priorität: 14.08.2000 DE 10039720
(43) Veröffentlichungstag der Anmeldung: 20.02.2002
(73) Patentinhaber: HILTI Aktiengesellschaft, 9494 Schaan (LI)
(72) Erfinder: Andresen, Arndt, 86899 Landsberg/Lech (DE)
(74) Vertreter: Wildi, Roland

(56) Entgegenhaltungen:
- EP-A- 0 988 873
- DE-A- 3 930 722
- US-A- 5 970 670

## Beschreibung

Die Erfindung betrifft eine Brandschutzmanschette für Rohre, Kabel und dergleichen.

Brandschutzmanschetten dienen als Brandschutzelemente bei Mauerdurchführungen in Wänden, Decken oder Böden von Gebäuden. Dort sollen sie bei brennbaren oder schmelzenden Rohren, Kabeln und dergleichen aus Kunststoff, Glas, Aluminium etc. die Mauerdurchführung verschließen, um einen Feuerdurchschlag zu verhindern. Die bekannten Brandschutzmanschetten besitzen üblicherweise ein rohrförmiges metallisches Gehäuse mit einem Öffnungs- bzw. Schließmechanismus und einem gegenüberliegenden Scharnier zum nachträglichen Einbau. Dieses wiederum erschwert bzw. macht es unmöglich, diese Brandschutzeinrichtungen direkt an Rohrbögen oder aber auch an schräg durchgeführten Rohren optimal zu positionieren.

In diesem Gehäuse ist üblicherweise eine ausreichende Menge intumeszierendes Material eingelegt, welches in der Regel in einer Bindematrix eingebettet ist. Dieses Material expandiert im Brandfall und verschliesst die durch das Wegbrennen oder -schmelzen des Rohres oder Kabels entstehende Öffnung. Die im Brandfall entstehende Öffnung zu verschliessen, ist um so schwieriger, je größer der Durchmesser der zu verschließenden Öffnung ist und je höher der Druck ist, der durch das Feuer (Ofendruck) entsteht. Ausserdem muß die Brandschutzeinrichtung mit der intumeszierenden Masse nach dem Brandfall gegebenenfalls auch dem Druck des Löschwassers standhalten. Mechanische Komponenten, wie beispielweise Federn, Klappen etc. oder chemische Zusätze in der Bindematrix, wie beispielsweise Ammoniumpolyphosphat, Zinkborat etc. unterstützen die verschliessende Wirkung der intumeszierenden Masse. Die bekannten mechanischen bzw. chemischen Hilfen erfüllen ihre Funktion nur bei verhältnismäßig kleinen Öffnungsdurchmessern zufriedenstellend. Weiterhin verteuern und erschweren sie Herstellung bzw. die spätere Anwendung.

Nach der US 4109423 wird durch die in der Brandschutzmanschette integrierte intumeszierenden Masse ein mechanisches Sperrelement geschlossen, welches ein hindurchgehendes Rohr beidseitig abquetscht und somit verschliesst. Nachteilig sind bei schwer zugänglichen Montagestellen insbesondere die steifen Sperrelemente sowie das steife Gehäuse.

Nach der DE3930722A1 beinhaltet eine Brandschutzmanschette innerhalb eines steifen Gehäuses eine intumeszierenden Masse, welche in loser, granulierter, rieselförmiger Form in unterkammerten, teilweise gefüllten, brennbaren Beuteln vorliegt und speziell auf einer Mischung von expandierendem Graphit und Bindemittel basiert. Jeder Teil eines zusätzlichen, als Sperrelement den Ringraum verschliessenden, Vorhanges wird aus einem Gewebeschlauchstück aus Glasgewebe gebildet. Jedes Schlauchstück ist dabei flach zusammengelegt. Nachteilig ist bei schwer zugänglichen Montagestellen insbesondere das steife Gehäuse.

Nach der WO 9704838 beinhaltet eine Brandschutzmanschette auf einer Innenseite einer metallischen Hülse ein Glasfasergewebe zur Begrenzung der Ausbreitung des intumeszierenden Materials. Nachteilig ist bei schwer zugänglichen Montagestellen insbesondere die steife metallische Hülse.

Nach der EP988873 sowie nach der US4538389 füllt bei einer Brandschutzmanschette eine intumeszierende Masse eine Hülse oder einen dehnbaren, nicht brennbare, Gewebeschlauch aus, welcher geschlossen und gefaltet sein kann. Nachteilig bei einer derartigen Lösung ist die eingeschränkte Befestigungsmöglichkeit eines derartigen Gewebeschlauches.

Aufgabe der vorliegenden Erfindung ist es daher, eine Brandschutzmanschette aufzuzeigen, welche im Brandfall auch Öffnungen grösserer Durchmesser zuverlässig verschließt, grösserem Feuerdruck widerstehen und dem Löschwasserdruck standhalten kann, wobei die zweckentsprechende Anwendung direkt an oder unter Rohrbögen und Schrägrohrdurchführungen voll gewährleistet wird.

Die Aufgabe wird im wesentlichen durch die Merkmale der unabhängigen Ansprüche gelöst. Vorteilhafte Weiterbildungen ergeben sich aus den Unteransprüchen.

Im wesentlichen weist eine Brandschutzmanschette für eine sich durch eine Öffnung in einer Wand erstreckende Rohrleitung einen, die Rohrleitung im wesentlichen umfänglich umlaufenden, feuerfesten Gewebeschlauch vorbestimmter Länge und Umfangs auf, welcher durch umfängliches, einseitiges Falten des Gewebeschlauches und durch eine Verbindung der einseitig innenliegenden Falten längs ihrer Fusspunkte mit der sie berührenden Gegenseite des Gewebeschlauches mit einem im Brandfall bei ca. ab 200 °C schmelzenden oder abbrennenden Faden in mehrere Kammern unterteilt ist, die jeweils intumeszierendes Material beinhalteten.

Die Verbindung der Falten mit dem Gewebeschlauch ist vorteilhaft vernäht oder verklebt.

Der feuerfeste Gewebeschlauch besteht vorteilhaft aus dichten Glasfaser-, Silikat-, Keramik-, Siliciumoxid-, Teflongewebe, anorganischen Fasermaterialien oder Kombinationen daraus, welches in sich nicht oder nur geringfügig dehnbar ist. Durch das umfängliche, einseitige Falten und Vernähen des Gewebes wird das vom Umfang des Gewebeschlauches umfasste Querschnittsvolumen wesentlich reduziert.

Vorteilhaft paarweise benachbart, nebeneinander angeordnete Kammern bilden ein flaches biegeflexibles Schlauchband aus, welches weiter vorteilhaft die Rohrleitung im wesentlichen umfänglich umschliesst.

Vorteilhaft ist das Schlauchband an beiden Stirnseiten mit einem Verschlussmittel mechanisch verschlossen, wodurch je Kammer jeweils ein geschlossenes Volumen entsteht, in welchem sich das intumeszierende Material ausbreiten kann.

Das Verschlussmittel ist vorteilhaft aus einem feuerfesten biegesteifen, U-förmigen Profil ausgebildet, bspw. als Stahlklemmprofil, welches eine Stirnseite des Schlauchbandes zusammengedrückt in sich einseitig aufnimmt.

Vorteilhaft ist an dem Verschlussmittel ein Verbindungselement angeordnet, bspw. eine Haken-Öse-Verbindung oder eine Stecker-Kupplung-Verbindung, welches jeweils zwei zugeordnete Stirnseiten eines oder mehrerer Schlauchbänder lösbar miteinander verbindet.

Das gesamte, optional aus einzelnen Schlauchbändern zusammengesetzte, Schlauchband weist vorteilhaft eine dem Umfang der zu verschließenden Rohrleitung entsprechende Länge auf, ist um die Rohrleitung herum gelegt und als Torus über ein Verbindungselement verschlossen.

Weiter vorteilhaft ist an zumindest einem Verschlussmittel ein Befestigungselement angeordnet, bspw. ein abgewinkeltes Montageblech mit einem Langloch, welches eine Wandoder Deckenmontage erlaubt.

Vorteilhaft besteht das in der Kammer eingefasste intumeszierende Material aus einem Gemisch lediglich vorverarbeiteter und somit preiswerter Rohstoffe ohne zusätzliche Bindematrix, wobei das intumeszierende Material weiter vorteilhaft in körniger oder granulierter Form die Kammern zumindest teilweise ausfüllt, wodurch das Schlauchband in alle Richtungen plastisch deformierbar ist sowie im Brandfall eine ausreichende Expansion des intumeszierenden Materials zur Ausfüllung des entfalteten Gewebeschlauches erfolgt. Somit sind auch schwierige Anwendungen, wie Schrägrohrdurchführungen oder eine Montage direkt unter Rohrbögen möglich.

Im Brandfall schmilzt oder verbrennt der Faden, und das in den Kammern beinhaltete intumeszierende Material expandiert. Das Schlauchband ist so dimensioniert, dass bei voller Auffaltung der Kammern die zu verschließende Öffnung noch ausreichend verschlossen wird. Das intumeszierende Material kann sich nur nach innen in Richtung Rohrleitungsmitte ausbreiten, weil der das Schlauchband ausbildende Gewebeschlauch eine Vergrösserung seiner Länge sowie seines Umfangs und somit eine Ausbreitung in eine andere Richtung nicht zulässt.

Da der, das expandierte Material umhüllende, Gewebeschlauch auch nach dem Brandfall noch geschlossen bzw. vorhanden ist, wird eine ausreichende Festigkeit sowohl beim als auch nach dem Brandfall gegen mechanische äussere Einflüsse gewährleistet.

Somit ist die erfinderische deformierbare Brandschutzmanschette ohne steifes Gehäuse oder andere wesentliche steife Bauteile bei unterschiedlichen Durchmessern der Rohrleitung sowie bei schwer zugänglichen Montagestellen (Schrägrohrdurchführung, Rohrbogenanwendung) verwendbar.

Das ohne Bindematrix als Gemisch vorliegende intumeszierende Material wird im Brandfall schneller aktiviert und erzielt bei der Expansion einen höheren Blähdruck.

Die durch den Gewebeschlauch geschlossene Krustenstruktur des expandierten Materials führt sowohl im als auch nach dem Brandfall zu einer höheren Festigkeit.

Die Erfindung wird bezüglich eines vorteilhaften Ausführungsbeispiels näher erläutert mit:
- Fig. 1: als eine Brandschutzmanschette
- Fig. 2: als Einzelheit mit Schnitt durch ein Schlauchband
- Fig. 3: als Einzelheit eines Schlauchbandes

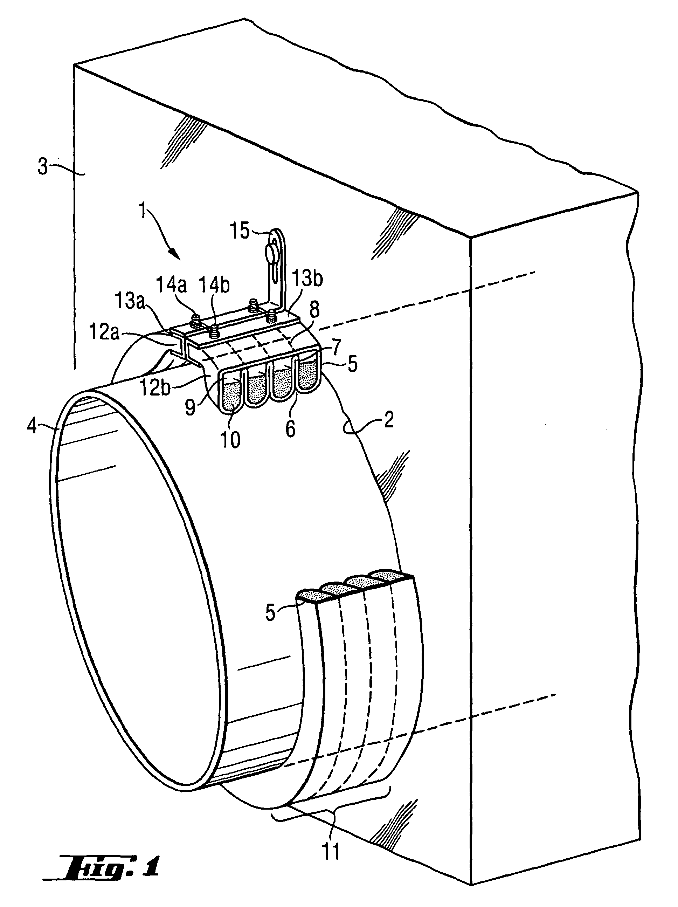

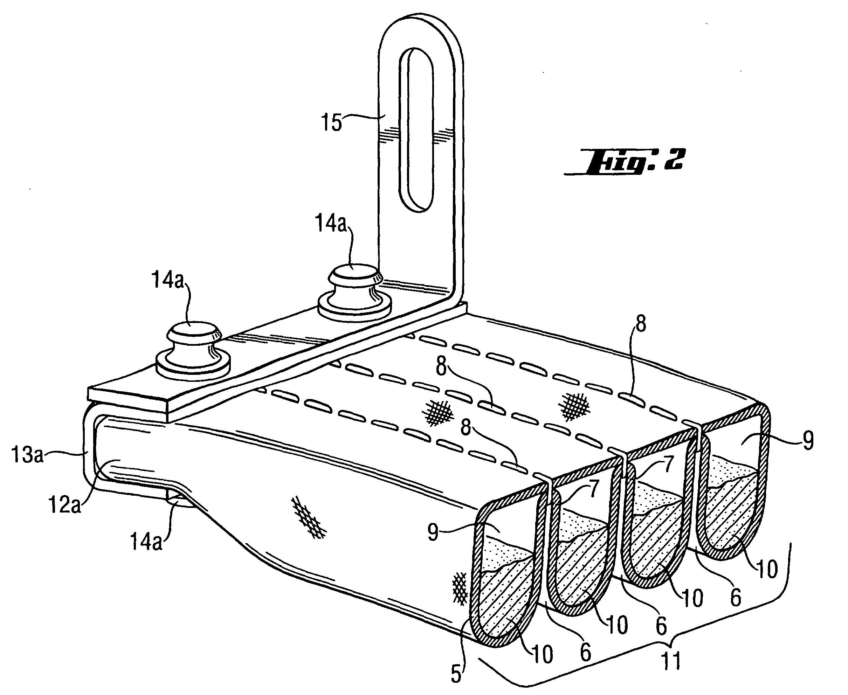

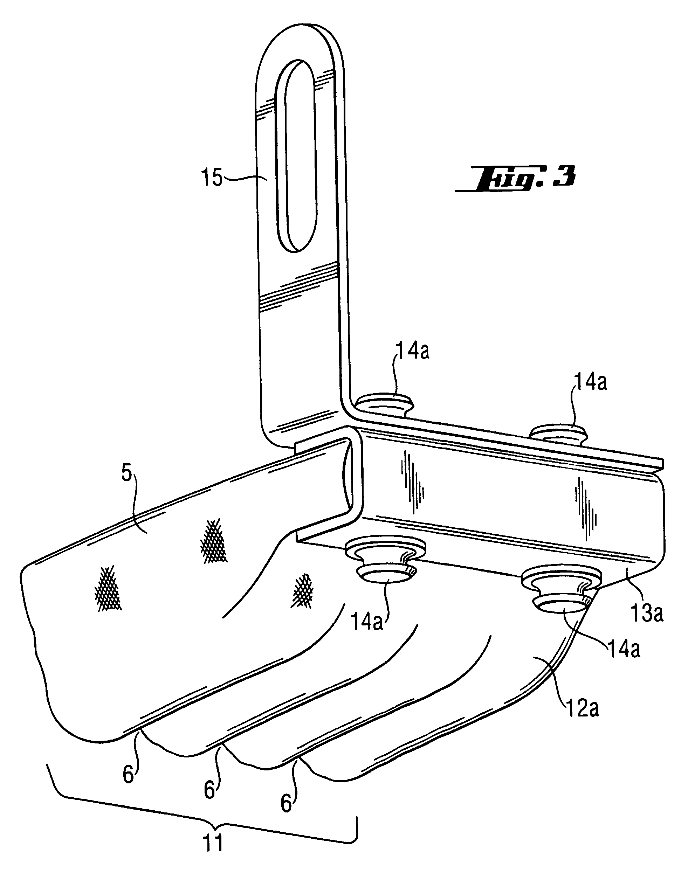

Nach Fig. 1 bzw. den Einzelheiten in Fig. 2 und Fig. 3 weist eine Brandschutzmanschette 1 für eine sich durch eine Öffnung 2 in einer Wand 3 erstreckende Rohrleitung 4 einen, die Rohrleitung 4 im wesentlichen umfänglich umlaufenden, feuerfesten Gewebeschlauch 5 aus dichten Glasfasergewebe vorbestimmter Länge und Umfangs auf. Dabei ist die Länge des Gewebeschlauches 5 geringfügig grösser als der Umfang der Rohrleitung 4 und der Umfang des Gewebeschlauches 5 geringfügig grösser als der Durchmesser der Rohrleitung 4. Der Gewebeschlauch 5 ist durch umfängliches, einseitiges Falten und durch Vernähen der einseitig innenliegenden Falten 6 des Gewebeschlauches 5 längs ihrer Fusspunkte 7 mit der sie berührenden Gegenseite des Gewebeschlauches 5 mit einem im Brandfall bei ca. ab 200 °C schmelzenden Faden 8 in mehrere Kammern 9 unterteilt, die jeweils intumeszierendes Material 10 beinhalteten. Die paarweise benachbarten, nebeneinander angeordneten Kammern 9 bilden ein flaches biegeflexibles Schlauchband 11 aus, welches die Rohrleitung 4 im wesentlichen umfänglich umschliesst. Das Schlauchband 11 ist an beiden Stirnseiten 12a, 12b mit je einem Verschlussmittel 13a, 13b in Form eines U-förmigen Stahlprofils mechanisch verschlossen, welches je eine Stirnseite 12a, 12b des Schlauchbandes 11 zusammengedrückt in sich einseitig aufnimmt. An den Verschlussmitteln 13a, 13b ist je ein Verbindungselement 14a, 14b in Form einer Stecker-Kupplung-Verbindung angeordnet, welches jeweils zwei zugeordnete Stirnseiten 12a, 12b eines Schlauchbandes 11 lösbar miteinander verbindet. Das gesamte Schlauchband 11 ist um die Rohrleitung 4 herum gelegt und als Torus über die Verbindungselemente 14a, 14b verschlossen. An dem Verschlussmittel 13a ist ein Befestigungselement 15 in Form eines abgewinkelten Montagebleches mit einem Langloch angeordnet, welches an die Wand 3 montiert ist.

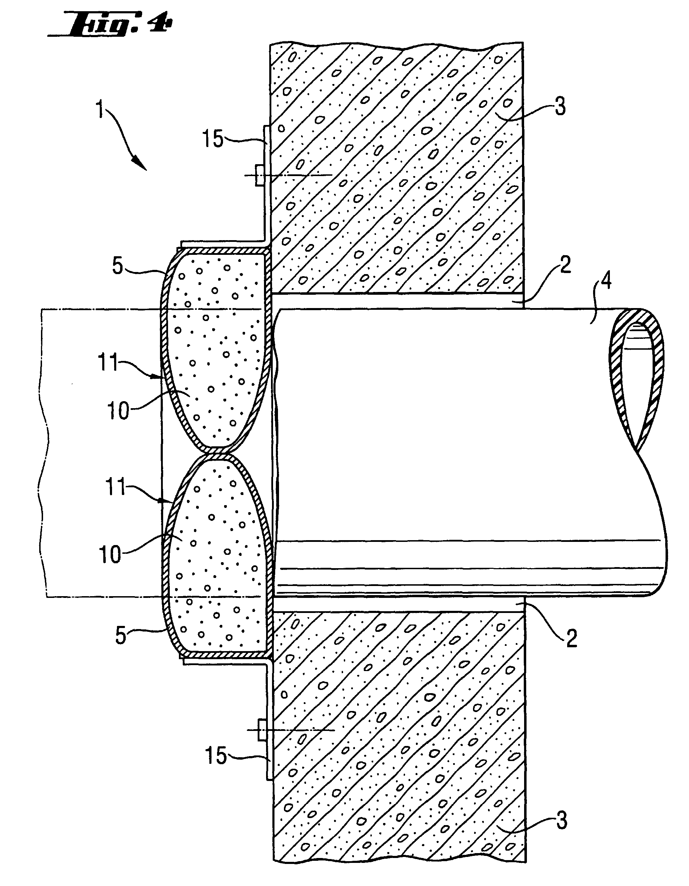

Nach Fig. 4 hat nach einem Brandfall die mit dem Befestigungselement 15 an der Wand 3 montierte Brandschutzmanschette 1 die Öffnung 2 im wesentlichen verschlossen, welche durch Abbrennen oder Schmelzen der sich zuvor durch die Öffnung 2 erstreckenden Rohrleitung 4 brandseitig offen ist. Der die Rohrleitung 4 zuvor im wesentlichen umfänglich gefaltet umlaufende, feuerfeste Gewebeschlauch 5 ist nach dem Brandfall im wesentlichen entfaltet und bildet, vollständig mit dem expandierten intumeszierenden Material 10 gefüllt, die Form eines Torus mit im wesentlichen geschlossener Torusöffnung aus. Der Gewebeschlauch 5 bildet somit für das expandierte intumeszierende Material 10 eine mechanische äussere Schutzhülle aus.

## Patentansprüche

1. Brandschutzmanschette für eine sich durch eine Öffnung (2) in einer Wand (3) erstreckende Rohrleitung (4) oder Kabeldurchführung, die zumindest teilweise von intumeszierendem Material (10) umfänglich umgeben wird, welches in einem feuerfesten, gefalteten Gewebeschlauch (5) beinhaltet ist, wobei die Brandschutzmanschette durch den Gewebschlauch und das intumeszierende Material gebildet wird, **dadurch gekennzeichnet, dass** der Gewebeschlauch (5) mehrere umfängliche, einseitig innenliegende Falten (6) ausbildet und dass die Falten (6) mit dem Gewebeschlauch (5) jeweils mit einem im Brandfall schmelzenden oder abbrennenden Faden (8) verbunden sind.

2. Brandschutzmanschette nach Anspruch 1, **dadurch gekennzeichnet, dass** der feuerfeste Gewebeschlauch (5) aus dichten Glasfaser-, Silikat-, Keramik-, Siliciumoxid-, Teflongewebe, anorganischen Fasermaterialien oder Kombinationen daraus besteht.

3. Brandschutzmanschette nach einem der vorherigen Ansprüche, **dadurch gekennzeichnet, dass** die längs jeweiliger Fusspunkte (7) mit einer diese berührenden Gegenseite des Gewebeschlauches (5) vernähten Falten (6) den Gewebeschlauch (5) in Kammern (9) unterteilen, welche zumindest teilweise intumeszierendes Material (10) beinhalten.

4. Brandschutzmanschette nach Anspruch 3, **dadurch gekennzeichnet, dass** der Gewebeschlauch (5) mit paarweise benachbarten, nebeneinander angeordneten Kammern (9) ein flaches biegeflexibles Schlauchband (11) ausbildet.

5. Brandschutzmanschette nach Anspruch 4, **dadurch gekennzeichnet, dass** das Schlauchband (11) an beiden Stirnseiten (12a, 12b) mit einem Verschlussmittel (13a, 13b) mechanisch verschliessbar ist.

6. Brandschutzmanschette nach Anspruch 5, **dadurch gekennzeichnet, dass** das Verschlussmittel (13a, 13b) aus einem feuerfesten, biegesteifen Profil ausgebildet ist und eine Stirnseite (12a, 12b) des Schlauchbandes (11) zusammengedrückt in sich einseitig aufnimmt.

7. Brandschutzmanschette nach Anspruch 6, **dadurch gekennzeichnet, dass** an dem Verschlussmittel (13a, 13b) ein Verbindungselement (14a, 14b) angeordnet ist, über welches jeweils zwei zugeordnete Stirnseiten (12a, 12b) eines oder mehrerer Schlauchbänder (11) lösbar miteinander verbindbar sind.

8. Brandschutzmanschette nach Anspruch 7, **dadurch gekennzeichnet, dass** das gesamte, optional aus einzelnen Schlauchbändern (11) zusammengesetzte, Schlauchband (11') eine dem Umfang der zu verschliessenden Rohrleitung (4) entsprechende Länge aufweist und um die Rohrleitung (4) herum als Torus über ein Verbindungselement (14a, 14b) verschlossen ist.

9. Brandschutzmanschette nach Anspruch 7 oder Anspruch 8, **dadurch gekennzeichnet, dass** an zumindest einem Verschlussmittel (13a) ein Befestigungselement (15) angeordnet ist, welches eine Wand- oder Deckenmontage erlaubt.

10. Brandschutzmanschette nach einem der vorherigen Ansprüche, **dadurch gekennzeichnet, dass** das im Gewebeschlauch (5) eingefasste intumeszierende Material (10) aus einem Gemisch in körniger oder granulierter Form besteht.

## Claims

1. Fire protection collar for a pipeline (4) or cable passage extending through an opening (2) in a wall (3), which is at least partially peripherally surrounded by intumescent material (10) which is contained in a fireproof folded fabric hose (5), and the fire protection collar is formed by the fabric hose and the intumescent material, **characterised in that** the fabric hose (5) forms a plurality of peripheral, singlesided internally placed folds (6), and the folds (6) with the fabric hose (5) are respectively connected to a thread (8) which melts or burns off in the event of a fire.

2. Fire protection collar according to Claim 1, **characterised in that** the fireproof fabric hose (2) is made of dense fibre glass, silicate, ceramic, silicon oxide, teflon fabric, inorganic fibre materials or combinations thereof.

3. Fire protection collar according to one of the above claims, **characterised in that** the folds (6), which are sewn along respective base points (7) to an adjacent opposite side of the fabric hose (5), divide the fabric hose (5) into chambers (9) which at least partially contain intumescent material (10).

4. Fire protection collar according to Claim 3, **characterised in that** the fabric hose (5) with adjacent pairs of chambers (9) arranged alongside each other establishes a flat flexural hose strip (11).

5. Fire protection collar according to Claim 4, **characterised in that** the hose strip (11) is at both ends (12a, 12b) mechanically closable by way of a closure means (13a, 13b).

6. Fire protection collar according to Claim 5, **characterised in that** the closure means (13a, 13b) is made of a fireproof, flexurally stiff profile and singlesidedly accommodates one end (12a, 12b) of the hose strip (11) in a compressed state.

7. Fire protection collar according to Claim 6, **characterised in that** on the closure means (13a, 13b) is arranged a connecting element (14a, 14b) by means of which two respective associated ends (12a, 12b) of one or more hose strips (11) are detachably connectible.

8. Fire protection collar according to Claim 7, **characterised in that** the entire hose strip (11'), which is optionally composed of individual hose strips (11), is of a length to correspond with the circumference of a pipeline (4) which is to be closed, and closed around the pipeline (4) as a torus via a connecting element (14a, 14b).

9. Fire protection collar according to Claim 7 or Claim 8, **characterised in that** a fastening element (15) is arranged on at least one closure means (13a) which allows assembly on wall or ceiling.

10. Fire protection collar according to one of the above claims, **characterised in that** the intumescent material (10) which is included in the fabric hose (5) is composed of a mixture in grainy or granulated form.

## Revendications

1. Manchette coupe-feu pour une conduite tubulaire (4) ou une traversée de câble s'étendant à travers une ouverture (2) dans un mur (3), laquelle est entourée en périphérie au moins partiellement de matière intumescente (10) qui est contenue dans un boyau tissé réfractaire plié (5), la manchette coupe-feu étant formée par le boyau tissé et par la matière intumescente, **caractérisée en ce que** le boyau tissé (5) comporte sur un de ses côtés plusieurs plis périphériques intérieurs (6), et **en ce que** les plis (6) sont chacun reliés au boyau tissé (5) par un fil (8) qui fond ou se consume en cas d'incendie.

2. Manchette coupe-feu selon la revendication 1, **caractérisée en ce que** le boyau tissé réfractaire (5) est constitué de tissu à base de fibre de verre, de silicate, de céramique, d'oxyde de silicium, de téflon, de matériaux fibreux inorganiques ou de combinaisons de ceux-ci.

3. Manchette coupe-feu selon une des revendications précédentes, **caractérisée en ce que** les plis (6) cousus le long de chaque point bas (7) avec un côté opposé du boyau tissé (5) en contact avec celui-ci divisent le boyau tissé (5) en chambres (9), lesquelles contiennent au moins partiellement de la matière intumescente (10).

4. Manchette coupe-feu selon la revendication 3, **caractérisée en ce que** le boyau tissé (5) avec des chambres jumelées juxtaposées (9) forme un collier plat, souple en flexion (11).

5. Manchette coupe-feu selon la revendication 4, **caractérisée en ce que** le collier (11) peut être fermé mécaniquement au niveau de ses deux faces frontales (12a, 12b) à l'aide d'un moyen de fermeture (13a, 13b).

6. Manchette coupe-feu selon la revendication 5, **caractérisée en ce que** le moyen de fermeture (13a, 13b) est constitué par un profilé réfractaire rigide en flexion et reçoit à l'intérieur d'un de ses côtés une face frontale comprimée (12a, 12b) du collier (11).

7. Manchette coupe-feu selon la revendication 6, **caractérisée en ce que** sur le moyen de fermeture (13a, 13b) est disposé un élément de liaison (14a, 14b) par l'intermédiaire duquel deux faces frontales respectivement associées (12a, 12b) d'un ou plusieurs colliers (11) peuvent être reliées entre elles de manière détachable.

8. Manchette coupe-feu selon la revendication 7, **caractérisée en ce que** le collier complet (11') optionnellement constitué de colliers individuels (11) présente une longueur correspondant à la circonférence de la conduite tubulaire (4) à fermer et est fermé sous forme de tore autour de la conduite tubulaire (4) par l'intermédiaire d'un élément de liaison (14a, 14b).

9. Manchette coupe-feu selon la revendication 7 ou la revendication 8, **caractérisée en ce qu'**un élément de fixation (15) qui permet une pose murale ou sous plafond est disposé au moins sur un moyen de fermeture (13a).

10. Manchette coupe-feu selon une des revendications précédentes, **caractérisée en ce que** la matière intumescente (10) logée dans le boyau tissé (5) est constituée d'un mélange en forme de grains ou de granulés.
